# EUROPÄISCHE PATENTSCHRIFT

(11) **EP 0 442 147 B1**
(45) Veröffentlichungstag und Bekanntmachung des Hinweises auf die Patenterteilung: **15.01.1997**
(21) Anmeldenummer: 90125722.0
(22) Anmeldetag: 28.12.1990
(51) Int. Cl.: D03D 15/00, B01D 63/02, F28F 21/06, A61M 1/18

(54) **Gewebtes Hohlfadenband**
Woven tape with hollow filaments
Ruban tissé à filaments creux

(30) Priorität: 16.02.1990 DE 4004797
(43) Veröffentlichungstag der Anmeldung: 21.08.1991
(73) Patentinhaber: Akzo Nobel N.V., 6824 BM Arnhem (NL)
(72) Erfinder: Baurmeister, Ulrich, Dr., W-5600 Wuppertal 1 (DE)
(74) Vertreter: Fett, Günter

(56) Entgegenhaltungen:
- EP-A- 0 089 122
- EP-A- 0 285 812
- DD-A- 233 946
- DE-A- 3 106 684
- DE-A- 3 108 944
- DE-A- 3 144 813
- US-A- 3 605 225
- US-A- 4 006 758
- US-A- 4 276 249

## Beschreibung

Die Erfindung betrifft ein gewebtes Hohlfadenband mit Schußfäden und Hohlfäden als Kettfäden.

Die Erfindung betrifft auch ein Verfahren zum Herstellen des gewebten Hohlfadenbandes sowie Hohlfadenbündel bestehend aus gewebten Hohlfadenbändern.

Ein gewebtes Hohlfadenband mit Schußfäden und Hohlfäden als Kettfäden und ein daraus hergestellter Blutoxygenator sind aus der EP-A2-0 089 122 bekannt, das als nächstliegender Stand der Technik angesehen wird. Bei diesem bekannten gewebten Hohlfadenband handelt es sich um ein solches, welches auf einer sogenannten Schützenwebmaschine hergestellt wird. Die Herstellung solcher gewebter Hohlfadenbänder ist sehr aufwendig und demzufolge teuer. Ein weiterer Nachteil bei den auf diese Weise gewebten Hohlfadenbändern besteht darin, daß der Schußfaden nicht - wie dies häufig gewünscht wird - wieder herausgezogen werden kann. Darüberhinaus weist dieses Hohlfadenband zum Schutz der Hohlfäden am Rand gegen die Querkräfte und den Abrieb durch den Webschützen und zur Aufnahme von Zugkräften notwendigerweise ein Monofilament (Vollfaden) an jeder Seitenkante auf. solche Fäden gestalten die Herstellung des Hohlfadenbandes aber aufwendiger und stören häufig im fertigen Gerät. Die Verarbeitung dieses bekannten gewebten Hohlfadenbandes zu einem Blutoxygenator und der Blutoxygenator selbst sind ebenfalls mit Nachteilen behaftet. Ein Nachteil dieses bekannten Verarbeitungsverfahrens eines gewebten Hohlfadenbandes zu einem Blutoxygenator ist sein großer technischer Aufwand. So ist für die Umlenkung bei der Umkehr des gewebten Hohlfadenbandes an den Enden des Wickelkörpers zur Bildung der nächsten Hohlfadenlage eine besondere Einrichtung notwendig, die die Umlenkung ermöglicht. Darüber hinaus ist der dabei entstehende nicht nutzbare Bereich der Umlenkung der Hohlfäden beträchtlich, was einen hohen Abfallanteil zur Folge hat. Auch hat dieses Verfahren den weiteren Nachteil, daß der Wicklungswinkel zur Achse des Wickelkörpers nur zwischen 30 und 90° liegt. Damit beträgt die Länge der Hohlfäden ein Mehrfaches der axialen Länge des Wickelkörpers. Dies führt zu einem erhöhten Druckverlust im Innern (Lumen) der Hohlfäden. Ferner sind, sofern sich nicht der Wicklungswinkel zwischen der Achse des Wickelkörpers und dem gewebten Hohlfadenband in Abhängigkeit von der Lagenzahl entsprechend ändert, die Längen der Hohlfäden mit zunehmender Lagenzahl größer. Hierdurch ergibt sich ein ungleichmäßiger Fluß durch die Hohlfäden, der im allgemeinen unerwünscht ist.

Der vorliegenden Erfindung lag daher die Aufgabe zugrunde, ein kostengünstig herstellbares und wesentlich vielseitiger einsetzbares gewebtes Hohlfadenband zur Verfügung zu stellen, welches auch eine Ausgestaltung ermöglicht, bei welcher der Schußfaden nur eine vorübergehende Hilfsfunktion bei der Verarbeitung einer Vielzahl von Hohlfäden (Hohlfadenschar) - also eine Prozeßhilfe - erfüllt. Eine weitere Aufgabe bestand darin, ein wesentlich einfacheres und kostengünstiges Herstellungsverfahren zum Herstellen eines solchen gewebten Hohlfadenbandes zu stellen. Eine weitere Aufgabe bestand schließlich darin, kostengünstig herstellbare Hohlfadenbündel aus solchen gewebten Hohlfadenbändern mit hoher Stoff- und/oder Wärmeaustauschleistung zur Verfügung zu stellen.

Gelöst wurden diese Aufgaben durch ein gewebtes Hohlfadenband mit Schußfäden und Hohlfäden als Kettfäden, welches erfindungsgemäß als doppelschüssiges Band ausgebildet ist, und wobei auch die beiden äußeren Kettfäden des Hohlfadenbandes Hohlfäden sind, durch das weiter unten beschriebene Verfahren, und durch die weiter unten beschriebenen Hohlfadenbündel.

Hohlfäden, deren Wand für Stoffe ganz oder teilweise durchlässig, also permeabel oder semipermeabel, ist, und die sich demzufolge zum Stoffaustausch, zur Stofftrennung und/oder zur Stoffübertragung eignen, werden häufig auch als Kapillarmembranen bezeichnet. Kapillarmembranen können im medizinischen oder technischen Bereich eingesetzt werden. Typische Einsatzgebiete für Kapillarmembranen sind beispielsweise die Blutplasmapherese, die Hämofiltration, die Elektrodialyse, die Dialyse, die Oxygenation, die umgekehrte Osmose, die Ultrafiltration, die Mikrofiltration, die Pervaporation usw.

Die Außendurchmesser der Hohlfäden (Kapillarmembranen) liegen beispielsweise in folgenden Bereichen:
für die Dialyse von 150 µm bis 280 µm;
für die Oxygenation von 150 µm bis 500 µm;
für die Plasmapherese von 150µm bis 650 µm.

Hohlfäden mit einer für Stoffe im wesentlichen undurchlässigen Wand werden häufig zur Wärmeübertragung, also in Wärmeaustauschern, eingesetzt. Hohlfäden mit einer (mikro-)porösen Wand werden beispielsweise zur (Mikro-) Filtration, Membrandestillation usw. eingesetzt.

Für Stoff- und Wärmeaustauscher dieser Art wird eine Vielzahl von Hohlfäden in der Regel zu einem Hohlfadenbündel zusammengefaßt und dabei vorzugsweise in eine bestimmte Ordnung gebracht, um den Strömungsraum zwischen den Hohlfäden für das die Hohlfäden außen umströmende Medium derart zu gestalten, daß je nach Anwendung eines solchen Hohlfadenbündels spezifische Forderungen an die Impuls-, Wärme- und Stofftransportphänomene erfüllt werden.

Zum Beispiel fließt bei einem Kapillarmembranoxygenator das Blut zwischen den Kapillarmembranen, d.h. diese werden vom Blut außen umströmt. Die Kapillarmembranen enden in einer Einbettung derart, daß ihre Öffnungen in getrennte Zu- bzw. Abströmkammern für den durch die Kapillarmembranen, also durch deren Lumen, fließenden Sauerstoff münden. Für den Gasaustausch zwischen dem Blut und dem Sauerstoff durch die Wand der Kapillarmembranen hindurch, ist es daher zweckmäßig, die Kapillarmembranen möglichst so anzuordnen, daß ein hoher Sauerstoff/CO₂-Übergang erzielt wird und damit nur eine geringe Blut/Membran-Kontaktfläche notwendig ist.

Diese und andere Forderungen werden durch die Erfindung auf kostengünstige und in technisch hervorragender Weise gelöst. Zum besseren Verständnis der hier verwendeten Terminologie und der Technologie des bevorzugten Herstellungsverfahrens und der hierzu geeigneten Vorrichtung wird auf die nachfolgend aufgeführten Druckschriften verwiesen, die insoweit auch zur Offenbarung der Erfindung dienen: DE-OS 31 06 684, DE-OS 31 08 944, US-PS 3,605,225, US-PS 4,006,758; Chemiefasern/Textilindustrie, 37./39. Jahrgang, Juni 1987, S. T 92 u. T 94 incl. zitierter Literaturstelle [5], Seiten 110-115; Bandwebtechnik, Hans Walter Kipp, Verlag Sauerländer, Seiten 20-22 und 97.

Unter doppelschüssigem Band wird im Rahmen der vorliegenden Erfindung ein gewebtes Band verstanden, bei welchem ein doppelter Schußeintrag erfolgte, also zwei Schußfäden pro Schußeintrag eingelegt wurden, wodurch sogenannte Doppelschüsse entstehen. Doppelter Schußeintrag bei textilen Geweben ist eine Ripsbindungsart und führt bei der dabei üblichen hohen Schußdichte zu Querrips 2-schüssig (Grain); sie wird auch als Grainbindung bezeichnet (vgl. auch DIN 61 101, Teil 2, Seite 3, Nr. 3.1.4).

Bei der Herstellung von gewebten Bändern mit Schützenwebmaschinen entsteht auf beiden Seiten des Bandes eine sogenannte echte Webkante. Schützenlose Webverfahren dagegen gestatten die Herstellung von gewebten Bändern, bei denen wenigstens eine Webkante nicht als echte Webkante ausgebildet ist. Eine Ausgestaltungsform der nicht echten Webkante ist die Wirkkante, die auch für eine besonders bevorzugte Ausgestaltungsform des erfindungsgemäßen gewebten Hohlfadenbandes gewählt wird. Die Wirkkante entsteht beispielsweise bei schützenlosen Webverfahren, bei denen der Schußfaden als Fadenschlaufe durch das Webfach gelegt (eingetragen) wird und die seitlich herausragende Schußfadenschlaufe zu einer Masche verwirkt (verhäkelt; vermascht), das heißt der Schußfaden mit sich selbst abgebunden wird. Dieser Vorgang wird auch als Wirkkantenbildung durch Vermaschung des Schußfadens bezeichnet. Eine solche Wirkkante läßt sich - falls gewünscht - wieder aufziehen (Aufriffeln), wodurch der Schußfaden mühelos wieder vollständig herausgezogen und entfernt werden kann. Es ist jedoch bei dieser Technik auch möglich, die Schußfadenschlaufen so abzubinden, beispielsweise mit einem Hilfsfaden, oder so zu fixieren, beispielsweise zu verkleben, daß ein Aufriffeln nicht möglich ist. Das Abbinden bzw. Vermaschen erfolgt üblicherweise mit einer Wirknadel.

Unter Schußdichte wird die Anzahl von Schußfäden pro Längeneinheit gewebten Bandes verstanden. Sie ist bei dem erfindungsgemäßen gewebten Hohlfadenband vorzugsweise wesentlich geringer als bei normalen gewebten Textilbändern, wodurch einerseits ein lockeres gewebtes Hohlfadenband mit ausreichend bemessenen Zwischenräumen für ein druckverlustarmes Umströmen der Hohlfäden entsteht, bei dem die Hohlfäden aber trotzdem in definierten gegenseitigen Abständen, also in der oben bereits erwähnten, für eine hohe Stoff- und/oder Wärmeübertragungsleistung wesentlichen, Ordnung angeordnet sind. Die geringe Schußdichte gestattet zudem in vorteilhafter Weise eine hohe Herstellungsgeschwindigkeit des gewebten Hohlfadenbandes. Unter geringer Schußdichte wird beispielsweise eine solche von 3-35 mm, insbesondere von 10 bis 15 mm pro Schuß verstanden, in jedem Fall aber eine solche, bei der benachbarte Schußfäden nicht eng aneinanderliegen bzw. sich nicht berühren. Die Schußfäden verlaufen also mäanderförmig oder bilden eine Zickzacklinie, eine Sägezahnlinie o.dgl. und bilden mit den Kettfäden einen Winkel der im Mittel kleiner als 90° ist, also beispielsweise 15° oder 30° oder 45°.

Bei dem erfindungsgemäßen gewebten Hohlfadenband werden die Schußfäden vorzugsweise aus einem monofilen oder multifilen Endlosfaden gebildet, der bei der Herstellung beispielsweise fortlaufend von einer Spule abgewickelt wird. Die Schußfäden können wesentlich feiner als die Hohlfäden sein. Die Schußfäden können auch aus ggf. unterschiedlichen gefachten Fäden bestehen. In besonderen Anwendungsfällen kann es vorteilhaft sein, wenn die Schußfäden aus demselben Material bestehen wie die Kettfäden (Hohlfäden).

Als Schußfäden können auch solche verwendet werden, die selbst eine einen Stoffaustausch bewirkende Eigenschaft aufweisen, die also beispielsweise in der Lage sind, aus dem die Hohlfäden umströmenden Medium eine Substanz zu ab- oder adsorbieren oder an dieses eine Substanz - ggf. verzögert oder langsam - abzugeben. Die Schußfäden können auch so angeordnet bzw. beschaffen sein, daß sie zu einer Turbulenzerzeugung oder Laminarvermischung führen. Die Schußfäden können darüber hinaus auch so eingebracht werden, daß sie eine Wellung (Ondulation) der Hohlfäden (= Kettfäden) bewirken, was zu einer Erhöhung der Stoff- und/oder Wärmeübertragungsleistung führen kann.

Das gewebte Hohlfadenband kann beispielsweise 3 bis 300 Hohlfäden als Kettfäden enthalten, wobei eine bevorzugte Ausführungsform 15 bis 40 Hohlfäden enthält. Die Breite des gewebten Hohlfadenbandes richtet sich im wesentlichen nach dem Durchmesser der Hohlfäden. Eine Breite von 10 mm, die hier nur beispielshalber genannt wird, hat sich bei der Weiterverarbeitung des gewebten Hohlfadenbandes zu Spulen und Hohlfadenbündeln als gut geeignet herausgestellt.

Das gewebte Hohlfadenband kann als Kettfäden auch Hohlfäden mit unterschiedlichen Eigenschaften aufweisen. Typische Eigenschaften von Hohlfäden, deren man sich zu unterschiedlichen Zwecken bedient, sind beispielsweise die Benetzbarkeit (Hydrophilie; Hydrophobie), die Permeabilität, die UF-Rate usw. Das gewebte Hohlfadenband kann also sowohl hydrophobe als auch hydrophile Hohlfäden aufweisen oder Hohlfäden mit unterschiedlichen Permeabilitäten, die jeweils einem anderen Zweck dienen. Es kann aber auch Hohlfäden aufweisen, die einen Stoffaustausch bewirken und solche, die der gleichzeitigen Wärmeübertragung dienen. Solche unterschiedlichen Hohlfäden können in beliebigen den jeweiligen Anforderungen entsprechenden Mischungsverhältnissen vorliegen.

Darüber hinaus kann das gewebte Hohlfadenband auch eine Anzahl von Fäden als Kettfäden aufweisen, die beispielsweise eine Stützfunktion haben oder die Zugfestigkeit des Hohlfadenbandes erhöhen und bei der Weiterverarbeitung des gewebten Bandes - ggf. hohe - Zugkräfte aufnehmen. Solche Fäden können aber auch adsorptive oder desorptive Eigenschaften aufweisen und Stoffe aus dem sie und die Hohlfäden umströmenden Medium entfernen oder Stoffe an dieses - ggf. in kontrollierter Weise - abgeben.

Fäden mit gezielt einstellbaren und auslösbaren Schrumpfeigenschaften können beispielsweise dazu benutzt werden, die Hohlfäden in einer gewünschten Weise zu einem bestimmten Zeitpunkt, beispielsweise während eines bestimmten Verarbeitungsschrittes, zu kräuseln.

Die hohe Ordnung des gewebten Hohlfadenbandes gestattet es somit, beispielsweise ein gewebtes Hohlfadenband für ein IV-Filter mit Entlüftung herzustellen, bei dem an mindestens einem Rand ein oder mehrere hydrophobe poröse Hohlfäden zur Entlüftung angeordnet sind. Die Einbettung der Hohlfäden kann dann so erfolgen, daß bedingt durch die hohe Ordnung innerhalb des gewebten Hohlfadenbandes die hydrophoben Randfäden, die die Entlüftung bewirken, von den hydrophilen Hohlfäden, die die Filtration bewirken, in der Einbettung durch einen entsprechenden Verteilerkopf voneinander getrennt werden.

Die Kett- und/oder Schußfäden können aber auch eine Funktion als Katalysator, Enzymspeicher, Wärmespeicher, Wärmespender usw. ausüben und zu diesem Zweck als Hohlfäden oder andere Fäden vorliegen. Werden zu diesen Zwecken Hohlfäden als Kettfäden verwendet, so können diese an ihren Enden auch verschlossen sein und der dadurch entstehende abgekapselte Innenraum (Lumen) mit einer geeigneten Substanz gefüllt sein. Bei einer solchen Kombination von unterschiedlichen Funktionen bietet das gewebte Hohlfadenband den Vorteil, daß es eine gleichförmig wiederholbare lokale Ordnung begünstigt.

Die Herstellung des gewebten Hohlfadenbandes erfolgt ähnlich wie auf einer schützenlosen Bandwebmaschine, was den Schußeintrag angeht. Als besonders vorteilhaft hat es sich dabei erwiesen, wenn zu diesem Zweck eine Einrichtung ähnlich, wie sie bei Nadelbandwebmaschinen üblich ist, verwendet wird. Bei dieser Verfahrensweise erfolgt der Schußeintrag sehr schonend, so daß an den Seitenkanten des Hohlfadenbandes keine zusätzlichen, besonderen Monofilamente zum Schutz der Hohlfäden zugeführt zu werden brauchen. Es ist jedoch auch möglich, eine Einrichtung zu verwenden, wie sie bei Greiferwebmaschinen üblich ist.

Beim erfindungsgemäßen Verfahren zur Herstellung des gewebten Hohlfadenbandes ist der Antrieb für den Transport der Kettfäden (Hohlfäden) und der Antrieb für die Einrichtung zum Eintragen der Schußfäden vorzugsweise entkoppelt oder entkoppelbar. Dies hat den Vorteil, daß die Schußfadendichte unabhängig von der Transportgeschwindigkeit der Kettfäden verändert werden kann oder der Schußeintrag auch ohne Unterbrechung des Transportes der Kettfäden völlig abgeschaltet werden kann, was beim Anfahren oder Auswechseln der Schußeintragseinrichtung von großem Vorteil ist. Übliche Bandwebmaschinen, wie z.B. Nadelbandwebmaschinen, bieten diesen Vorteil nicht und sind zudem nur für hohe Schußdichten ausgelegt. Die Transportgeschwindigkeit für die Kettfäden ist dabei so niedrig, daß eine Verwendung dieser Maschinen weder zur Herstellung von Hohlfadenbändern mit wesentlich geringerer Schußdichte noch für das Integrieren in den Herstellungsprozeß für Hohlfäden geeignet sind. Der Einsatz der bekannten Nadelbandwebmaschinen führt somit zu Hohlfadenbändern mit der üblichen hohen Schußdichte und gestattet zudem nur die Verarbeitung von Hohlfadenspulen. Allerdings wird auch hierbei der Vorteil erzielt, daß bei entsprechender Ausgestaltung der Wirkkante der Hohlfadenbänder der Schußfaden zu einem späteren Zeitpunkt wieder herausgezogen werden kann, da auch hierbei ein doppelschüssiges Hohlfadenband gebildet wird.

Ein wesentlicher Vorteil wird aber auch bei solchen Webmaschinen insbesondere dann erreicht, wenn - wie oben bereits ausgeführt - der Antrieb für den Transport der Kettfäden und der Antrieb für den Schußeintrag entkoppelt werden oder entkoppelbar sind. Die im zuletzte genannten Fall also nur fakultative Kopplung der beiden Antriebe kann auf mechanischem oder elektrischem Wege erfolgen.

Bei der Herstellung der besonders bevorzugten Ausgestaltungsform des Hohlfadenbandes mit niedriger Schußdichte kann in vorteilhafter Weise auf das sonst übliche Webblatt, durch welches die jeweils eingelegten Schußfäden an die bereits eingewebten Schußfäden angeschlagen werden, verzichtet werden. Dies wiederum führt zu einer Vereinfachung des Herstellungsverfahrens und der hierzu geeigneten Vorrichtung.

Die Webfachbildung kann so erfolgen, daß jeweils jeder zweite Hohlfaden angehoben wird, wie bei der Leinwandbindung. Bei Verwendung von mehr als zwei fachbildenden Einrichtungen und/oder durch entsprechende Ausgestaltung der fachbildenden Einrichtungen können auch andere Bindungsarten, also beispielsweise solche mit flottierender Bindung und dergleichen, erzeugt werden, indem die Fachbildung beispielsweise wie bei der Atlas- oder der Körperbindung erfolgt.

Zur Webfachbildung können auch beim Verfahren nach der Erfindung übliche Schäfte mit Litzen verwendet werden. Wesentlich vorteilhafter ist es jedoch, zur Fachbildung oben (oder unten) offene Kämme mit unterschiedlich tiefen Fadenschächten einzusetzen. Derartige Kämme o. dgl. Einrichtungen können mit einer Einrichtung versehen werden, durch welche die Fadenschächte nachträglich von oben (oder von unten) verschlossen, beispielsweise abgedeckt, werden können.

Zur Webfachbildung kann auch eine rotierende oder eine vorund zurückdrehbare Einrichtung ähnlich einer Nockenwelle verwendet werden, bei welcher die "Nocken" das Anheben der Hohlfäden zur Fachbildung bewirken. Bei der Verwendung von Kämmen können diese wie die Schäfte von üblichen Webmaschinen bewegbar angeordnet sein, sie können jedoch auch auf einer gemeinsamen drehbaren Welle angeordnet sein, so daß die Fachbildung ähnlich wie bei der zuvor beschriebenen nockenwellenähnlichen Einrichtung erfolgt. Darüber hinaus ist es auch möglich, mehr als einen Hohlfaden durch eine Litze bzw. einen Fadenschacht (bei der Verwendung von Kämmen) zu führen.

Solche oben (oder unten) offenen Kämme o.dgl. Einrichtungen zur Fachbildung können mit Vorteil nicht nur in eine ruhende, sondern auch in eine laufende Kettfadenschar von unten (oder von oben oder von der Seite) eingefahren werden, was die Einleitung des Webvorgangs an ruhenden Kettfäden wesentlich erleichtert und an laufenden Kettfäden überhaupt erst ermöglicht.

Der kontinuierliche Hohlfadenherstellungsprozeß wird hierdurch nicht unterbrochen und beim Ausfall der Webeinrichtung kann ohne Unterbrechung eine Ersatzeinrichtung eingefahren werden. Auch eine Wartung oder ein Austausch der Webeinrichtung ist dabei möglich, ohne daß die Herstellung der Hohlfäden unterbrochen oder beeinflußt wird.

Die Ausführungsform des Verfahrens zum Herstellen des gewebten Hohlfadenbandes, bei welchem ohne Webblatt und mit entkoppelten oder entkoppelbaren Antrieben für die Kett- und Schußfäden - wie oben bereits erläutert - und mit oben (oder unten) offenen Kämmen o.dgl. Einrichtungen zur Webfachbildung gearbeitet wird, ist daher ganz besonders geeignet, in den Herstellungsprozeß für die Hohlfäden integriert zu werden. Diese Möglichkeit, die bei dem bisher bekannten Verfahren zum Herstellen eines gewebten Hohlfadenbandes nicht bestand, stellt einen wesentlichen Vorteil und einen erheblichen technischen Fortschritt dar, der beispielsweise in einer Reduzierung der Verfahrensschritte und damit der Kosten bei der Herstellung von gewebten Hohlfadenbändern besteht, da es hierbei nicht mehr wie bisher erforderlich ist, die Hohlfäden zunächst zu Spulen aufzuwickeln und erst danach zu gewebten Hohlfadenbändern zu verarbeiten.

So kann das Verfahren in seiner bevorzugten Ausführungsform auch an noch nassen, feuchten oder insgesamt unfertigen Hohlfäden durchgeführt werden, also noch vor dem Extrahieren von Lösungsmitteln, vor der Trocknung oder an einem anderen Punkt innerhalb des Herstellungsprozesses. Dies ist möglich, weil Hohlfäden im allgemeinen direkt nach der Koagulation oder der Phasenseparation bereits eine Grundfestigkeit erreichen, die es erlaubt, die Hohlfäden durch die erfindungsgemäße Webvorrichtung, bei der der Schußeintrag sehr schonend erfolgt, zu transportieren. Damit kann bereits in einem sehr frühen Stadium des Herstellungsprozesses ein Fadenverband, nämlich ein gewebtes Hohlfadenband, hergestellt werden, der sich im Prozeß wesentlich günstiger verhält und sich einfacher handhaben läßt. So werden z.B. auf oder zwischen Umlenkwalzen Verhedderungen, Durchhänger oder Überschläger (ungewollte Überkreuzungen von Fäden), die bei Fadenscharen mit parallel laufenden Hohlfäden häufig zu beobachten sind, vermieden. Ferner kann auf diese Weise der gegenseitige Abstand der Hohlfäden optimiert werden, indem er einerseits möglichst klein bemessen wird, was zu einer höheren Belegungsdichte vorhandener Anlagen ausgenutzt werden kann oder bei gleichem Produktionsausstoß zu wesentlich kleineren (schmaleren) Anlagen führt, andererseits aber groß genug für eine gute Umströmung der Hohlfäden bei Verfahrensschritten wie Extraktion, Waschen, Trocknen usw. Als für die meisten Anforderungen vorteilhaft hat sich ein lichter Hohlfadenabstand im Bereich von 0,2 d bis 1,5 d (d = Hohlfadenaußendurchmesser) erwiesen. Außerdem wird die Gefahr von Fadenabrissen innerhalb des Prozesses vermindert und somit die Verarbeitbarkeit von Hohlfadenscharen wesentlich verbessert.

Das erfindungsgemäße Verfahren kann aber auch in Herstellungsprozesse integriert werden, bei denen die Hohlfäden durch Schmelzspinnen erzeugt werden.

Das schützenlose Webverfahren gemäß der Erfindung gestattet - insbesondere dann, wenn der Schußeintrag ähnlich wie bei einer Bandwebmaschine üblich erfolgt - hohe Verarbeitungsgeschwindigkeiten von Hohlfäden, d.h. Hohlfadenscharen, zu erfindungsgemäßen gewebten Hohlfadenbändern, wobei die Verarbeitungsgeschwindigkeit allenfalls durch die technisch erreichbare Schußfrequenz begrenzt ist. Das Verhältnis von Schußfrequenz zu Kettfadengeschwindigkeit ergibt die Schußdichte, also den Abstand zwischen den einzelnen Schußfäden. Je höher die Zu- bzw. Abführgeschwindigkeit der Hohlfäden zu bzw. von der Schußeintragseinrichtung bei gleichbleibender Schußfrequenz desto geringer wird die daraus resultierende Schußdichte und umgekehrt. Die Schußdichte sollte aus Kostengründen möglichst niedrig bemessen werden, aber so, daß die technischen Anforderungen in jedem Fall erfüllt werden. Auch hierbei läßt sich ein Optimum durch einfache Versuche ermitteln. Das erfindungsgemäße Verfahren wird demzufolge vorzugsweise bei Verarbeitungsgeschwindigkeiten der Hohlfäden im Bereich von 10 bis 80 m/min mit einer Schußfrequenz im Bereich von 30 bis 200 Hz durchgeführt.

Das gewebte Hohlfadenband nach der Erfindung kann beispielsweise zu Spulen, Hohlfadenbündeln oder anderen Hohlfadenanordnungen verarbeitet werden.

Häufig werden zur Herstellung bestimmter Hohlfadeneinrichtungen multifile Spulen gewünscht, also Spulen, auf denen eine vorgegebene Anzahl von Hohlfäden aufgewickelt ist. Dies wird häufig dann gewünscht, wenn die Anzahl der Hohlfäden in der fertigen Einrichtung (z.B. IV-Filter) relativ gering ist und sich eine solche geringe Anzahl von Hohlfäden zu einer Spule aufwickeln läßt. Bei Einsatz eines gewebten Hohlfadenbandes mit einer entsprechenden Anzahl von Hohlfäden entfällt nunmehr das Zusammenfachen mehrerer von verschiedenen Spulen abgewickelter Hohlfäden zu multifilen Spulen.

Beim Abwickeln bisher üblicher multifiler Spulen kommt es häufig zu Klemmfäden oder Durchhängern, was zu Unterbrechungen oder Fadenbrüchen führen kann. Diese Probleme können mit multifilen Spulen vermieden werden, bei denen die Hohlfäden nunmehr als gewebtes Hohlfadenband aufgewickelt sind. Häufig ist im Endprodukt der Schußfaden jedoch unerwünscht, wofür es die unterschiedlichsten Gründe geben kann. Hier bietet das gewebte Hohlfadenband nach der Erfindung als weiteren wesentlichen Vorteil die Möglichkeit, daß der Schußfaden bei entsprechender Abbindung (Vermaschung) nach dem Abwickeln des Hohlfadenbandes von der Spule aber erst unmittelbar vor der weiteren Verarbeitung der Hohlfäden wieder herausgezogen werden kann. Diese Möglichkeit eröffnet ein wesentlich breiteres Einsatzspektrum für die erfindungsgemäß gewebten Hohlfadenbänder, insbesondere dort, wo der Kettfaden nur eine vorübergehende Hilfsfunktion erfüllt.

Das gewebte Hohlfadenband gemäß der Erfindung kann aber auch zu Hohlfadensträngen aufgewickelt werden, aus denen anschließend Hohlfadenbündel in der gewünschten Länge herausgeschnitten werden. Hierzu können beispielsweise ein Verfahren oder eine Vorrichtung verwendet werden, wie sie in der DE-A1-33 01 268 beschrieben sind.

Die Verarbeitung des gewebten Hohlfadenbandes nach der Erfindung zu Hohlfadenbündeln kann jedoch auch auf andere Art und Weise erfolgen, wobei besonders bevorzugte Herstellungsverfahren von Hohlfadenbündeln und die nach diesem Verfahren hergestellten Hohlfadenbündel weiter unten beschrieben und mit Hilfe der Figuren näher erläutert werden. Die sogenannte Packungsdichte - also das Verhältnis von mit Hohlfäden gefülltem Volumen zu Gesamtvolumen - bei einer aus erfindungsgemäßen Hohlfadenbändern herzustellenden Einrichtung (Dialysator, Oxygenator, Wärmetauscher usw.) kann dabei im Bereich von 30-60% eingestellt werden.

Die Erfindung wird nachfolgend anhand der Zeichnung näher erläutert. Es zeigt in vereinfachter schematischer Darstellungsweise:
- Fig. 1: eine Ausführungsform des gewebten Hohlfadenbandes,
- Fig. 2: eine Ausführungsform des gewebten Hohlfadenbandes,
- Fig. 3: eine Ausführungsform der Schußeintragseinrichtung,
- Fig. 4: eine Ausführungsform der Einrichtung zur Webfachbildung,
- Fig. 5: ein Hohlfadenbündel aus gewebten Hohlfadenbändern,
- Fig. 6: ein Hohlfadengelege aus gewebten Hohlfadenbändern,
- Fig. 7: ein Hohlfadenbündel aus gewebten Hohlfadenbändern.

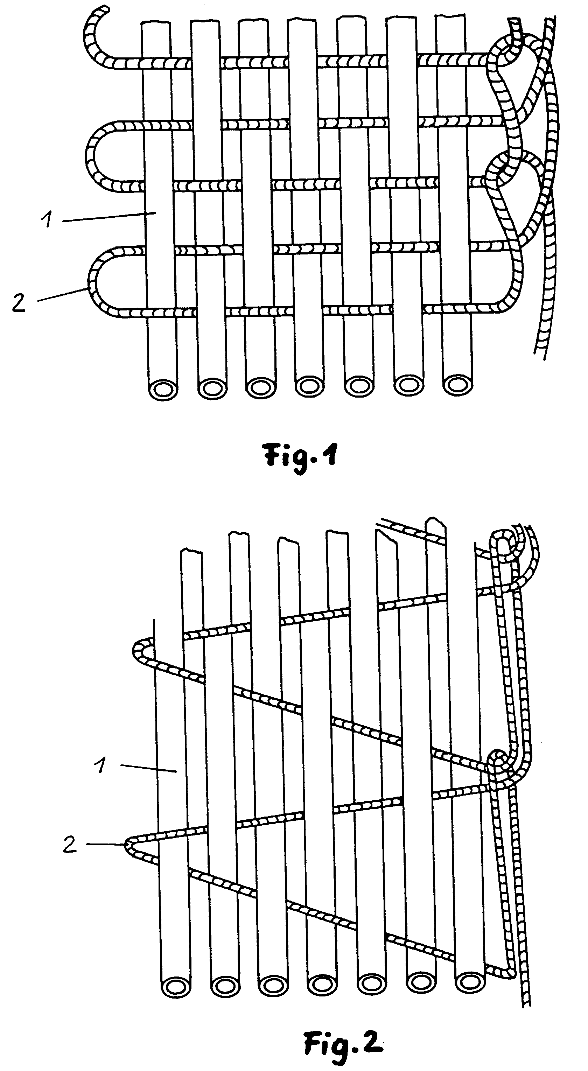

In Figur 1 ist der Abschnitt eines gewebten Hohlfadenbandes dargestellt bestehend aus den Hohlfäden 1 als Kettfäden und den Schußfäden 2. Die Schußfäden 2 verlaufen bei dieser Ausführungsform des gewebten Hohlfadenbandes im wesentlichen parallel zueinander und senkrecht zu den Hohlfäden (Kettfäden) 1, wobei deutlich die Doppelschüsse zu erkennen sind. Die in der Darstellung linke Kante des gewebten Hohlfadenbandes ist als echte Webkante ausgebildet. Die rechte Bandkante dagegen ist als Wirkkante ausgebildet, indem die seitlich herausragenden Schußfadenschlaufen miteinander verwirkt (vermascht) sind, d.h. mit sich selbst abgebunden sind. Eine solche Wirkkante läßt sich auf Wunsch wieder aufziehen. Deutlich zu sehen ist auch die geringe Schußdichte, die daraus resultiert, daß die benachbarten Schußfäden 2 sich nicht berühren, sondern in einem Abstand, der ein Vielfaches der Schußfadenstärke beträgt, angeordnet sind. Im Sinne der vorliegenden Erfindung kann diese Anordnung auch als mäanderförmiger Verlauf der Schußfäden bezeichnet werden.

In Figur 2 ist der Abschnitt eines gewebten Hohlfadenbandes dargestellt, bei dem die Schußfäden 2 eine Zick-Zack-Linie und somit mit den Hohlfäden (Kettfäden) 1 einen Winkel, der kleiner als 90° ist, bilden.Die Schußdichte ist hierbei noch geringer als bei dem in Figur 1 dargestellten gewebten Hohlfadenband. Bezüglich der übrigen Merkmale dieser Ausführungsform des gewebten Hohlfadenbandes wird auf die Beschreibung der in Figur 1 dargestellten Ausführungsform des gewebten Hohlfadenbandes verwiesen.

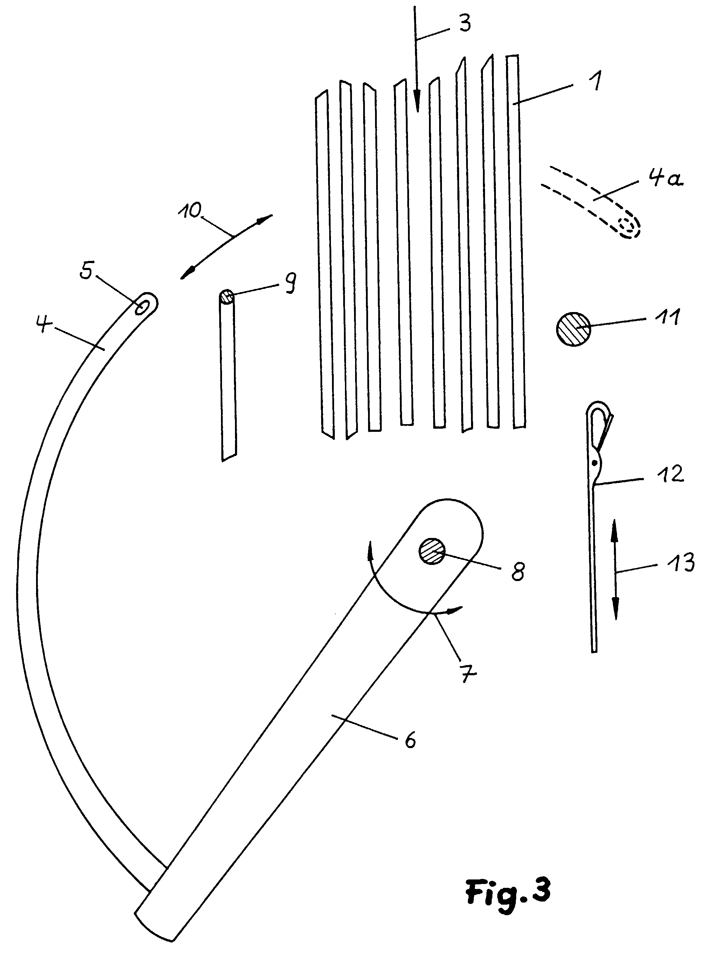

In Figur 3 ist eine Schußeintragseinrichtung dargestellt, die einer solchen ähnelt, wie sie bei Nadelbandwebmaschinen üblich ist, und die vorzugsweise beim Verfahren und in der Vorrichtung zum Herstellen des gewebten Hohlfadenbandes eingesetzt wird. Die Hohlfäden 1 durchlaufen die Webvorrichtung in der durch den Pfeil 3 dargestellten Richtung.Die Einrichtung besteht aus dem Eintragsorgan (Nadel) 4 mit der Fadenöse 5 für den Schußfaden (nicht dargestellt), welches mit dem Haltearm 6 fest verbunden ist. Der Haltearm 6 ist mit der hin- und herdrehbaren Welle 8 fest verbunden und führt demzufolge eine Bewegung aus, wie sie durch den Pfeil 7 angedeutet ist. Durch die Bewegung des Haltearms 6 wird auch die Nadel 4 in eine entsprechende Bewegung zwischen zwei Endstellungen versetzt, wie durch den Pfeil 10 angedeutet. In der Darstellung ist die Nadel 4 in ihrer (in der Bildebene) linken Endstellung dargestellt. Die (in der Bildebene) rechte Endstellung liegt rechts oberhalb des Umlenkstabes 11, wie durch die gestrichelt gezeichnete Spitze 4a der Nadel 4 angedeutet. Der Umlenkstab 11 ist senkrecht zur Bildebene angeordnet und damit senkrecht zur Ebene, in welcher die Hohlfäden (Kettfäden) 1 den Wirkungsbereich der Webvorrichtung passieren. Ein weiteres Teil der Webvorrichtung ist das Rückhalteorgan 9 für den Schußfaden (nicht dargestellt), welches im wesentlichen senkrecht zur Bildebene, also auch senkrecht zur Hohlfadenbandebene auf- und abbewegbar angeordnet ist. Zum Vermaschen der Schußfadenschlaufen an der (in der Bildebene) rechten Hohlfadenbandkante dient die Wirknadel (Zungennadel) 12, die parallel zur Längsrichtung des Hohlfadenbandes hin- und herbewegbar angeordnet ist, wie durch den Pfeil 13 angedeutet. Die Wirkungsweise der in Figur 3 dargestellten Schußeintragseinrichtung entspricht im wesentlichen derjenigen, wie sie von Nadelbandwebmaschinen her bekannt ist, und braucht daher hier nicht näher erläutert zu werden. Ein Webblatt, wie bei Nadelbandwebmaschinen üblich, fehlt bei der dargestellten Einrichtung jedoch.

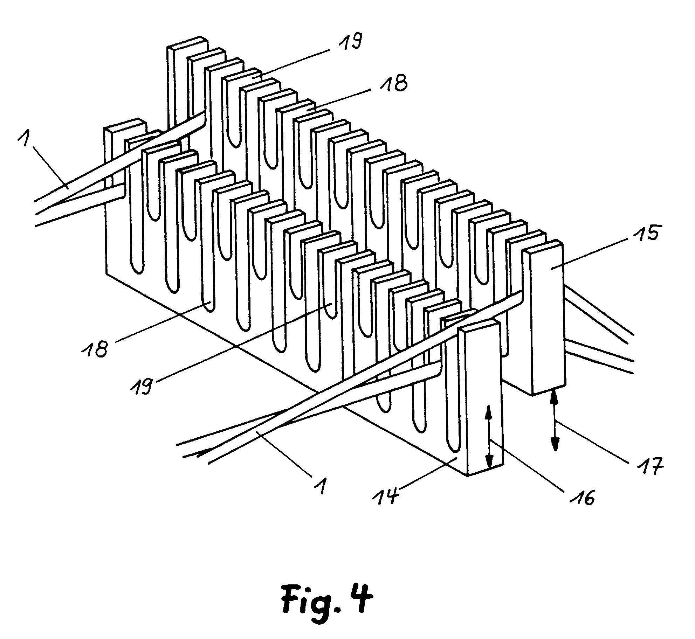

In Figur 4 sind zwei oben offene Kämme 14; 15 zur Webfachbildung dargestellt. Die Kämme 14; 15 haben unterschiedlich tiefe Fadenschächte 18; 19, wobei die Fadenschächte 18 etwa doppelt so tief wie die Fadenschächte 19 sind. Die Kämme 14; 15 sind auf- und abbewegbar, wie durch die Pfeile 16 und 17 angedeutet. Die Fadenschächte 18; 19 des Kammes 14 sind gegenüber den Fadenschächten 18; 19 des Fadenkammes 15 versetzt angeordnet, d.h. in Kettfadenlaufrichtung betrachtet liegt jeweils ein Fadenschacht 18 des Kammes 14 und ein Fadenschacht 19 des Kammes 15 hintereinander usw. Das Webfach ist mit Hilfe der nur an den beiden Seiten der Fadenkämme 14; 15 eingezeichneten Hohlfäden (Kettfäden) 1 dargestellt. Bei der hier dargestellten Ausführungsform der Kämme 14; 15 folgt auf jeden tiefen Fadenschacht 18 ein weniger tiefer Fadenschacht 19, wodurch die Webfachbildung wie bei der Leinwandbindung erfolgt. Es kann jedoch auch eine andere Anordnung der Fadenschächte vorgesehen werden, beispielsweise in der Weise, daß zwei tiefen Fadenschächten 18 ein oder zwei weniger tiefe Fadenschächte 19 folgen usw.

Die Fadenschächte 18; 19 der dargestellten Kämme 14; 15 können nach dem Einlegen der Hohlfäden 1 auch abgedeckt werden, so daß ein Herausspringen von Hohlfäden 1 während des Webens vermieden wird. Die dargestellten offenen Kämme 14; 15 können in der dargestellten Anordnung mit Vorteil von unten auch bei einer laufenden Kettfadenschar ein- und ausgefahren werden, wodurch der Webvorgang auch an einer laufenden Kettfadenschar jederzeit eingeleitet oder ausgesetzt werden kann, dies natürlich vor bzw. nach Entfernen einer ggf. vorgesehenen Abdeckung der Fadenschächte 18;19. Bei umgekehrter Anordnung der Kämme 14; 15 erfolgt das Ein- und Ausfahren in die bzw. aus der Kettfadenschar von oben.

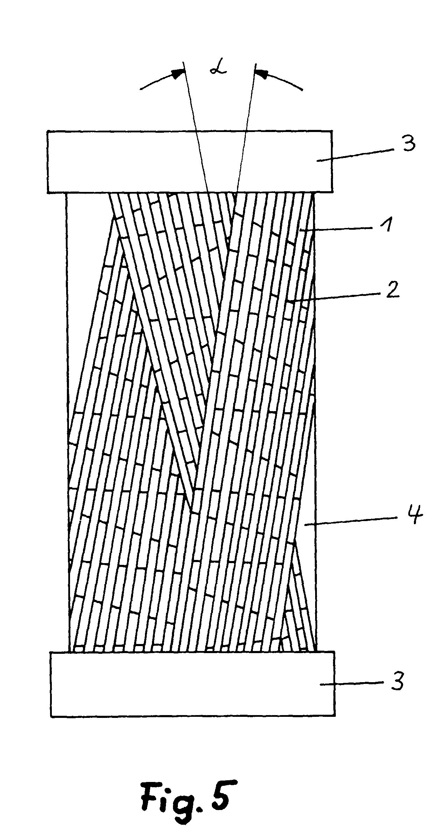

In Figur 5 ist ein Hohlfadenbündel aus gewebten Hohlfadenbändern dargestellt, bei welchem die Enden der Hohlfäden 1 in den Kopfplatten 3 eingebettet sind. Üblicherweise geschieht die Einbettung der Hohlfadenenden durch Einschleudern in eine aushärtbare Vergußmasse. Nach dem Aushärten der Vergußmasse wird stirnseitig dann soviel Material abgetragen, bis die offenen Enden der Hohlfäden 1 freigelegt sind, so daß ein Durchströmen des Hohlraums (Lumens) der Hohlfäden 1 möglich ist. Dies kann einseitig erfolgen, beispielsweise bei sogenannten Dead-End-Filtern, oder zweiseitig, wie beispielsweise bei Dialysatoren, Oxygenatoren, Wärmeaustauschern usw. üblich. Der besseren Übersicht wegen sind nur drei gewebte Hohlfadenbänder dargestellt, die um einen Kern 4 (z.B. ein Kernrohr) schichtweise angeordnet sind, und zwar derart, daß die Hohlfäden 1 benachbarter Schichten einen Winkel α bilden, der vorzugsweise ≦ 30° ist und in besonderen Fällen auch nur ungefähr 1° betragen kann. Durch das Vorhandensein der Schußfäden 2 wird erreicht, daß selbst bei so kleinen Kreuzungswinkeln die Überkreuzung aufrechterhalten wird und die Hohlfäden einer Schicht nicht - wie bei Hohlfadenbändern ohne Schußfäden unvermeidbar - in die Zwischenräume einer benachbarten Schicht rutschen, wodurch ein ungeordnetes Hohlfadenbündel mit im wesentlichen parallel zueinander angeordneten, sich gegenseitig berührenden Hohlfäden entstehen würde, welches eine äußerst unzureichende Umströmungsverteilung aufweisen würde. Der Winkel, den die Hohlfäden 1 mit der Bündellängsachse (nicht dargestellt) bilden, beträgt ungefähr α/2.

Ein Hohlfadenbündel aus gewebten Hohlfadenbändern kann auch ohne Kern gebildet werden. So kann man beispielsweise zwei Lagen (Schichten) aus gewebten Hohlfadenbändern bilden, wobei die Hohlfadenbänder innerhalb einer Lage (Schicht) parallel zueinander angeordnet sind, mit den Hohlfadenbändern der anderen Lage (Schicht) jedoch einen Winkel α bilden. Die beiden Lagen (Schichten) können dann anschließend spiralförmig auch ohne einen Kern zu einem Hohlfadenbündel aufgewickelt werden. Dabei versteht es sich von selbst, daß zunächst auch mehr als zwei Lagen (Schichten) gebildet werden können, wobei die Hohlfäden benachbarter Lagen (Schichten) einen Kreuzungswinkel α bilden, und daß dieses mehrlagige (mehrschichtige) Gebilde dann spiralförmig, ggf. um einen Kern, zu einem Hohlfadenbündel aufgewickelt werden kann.

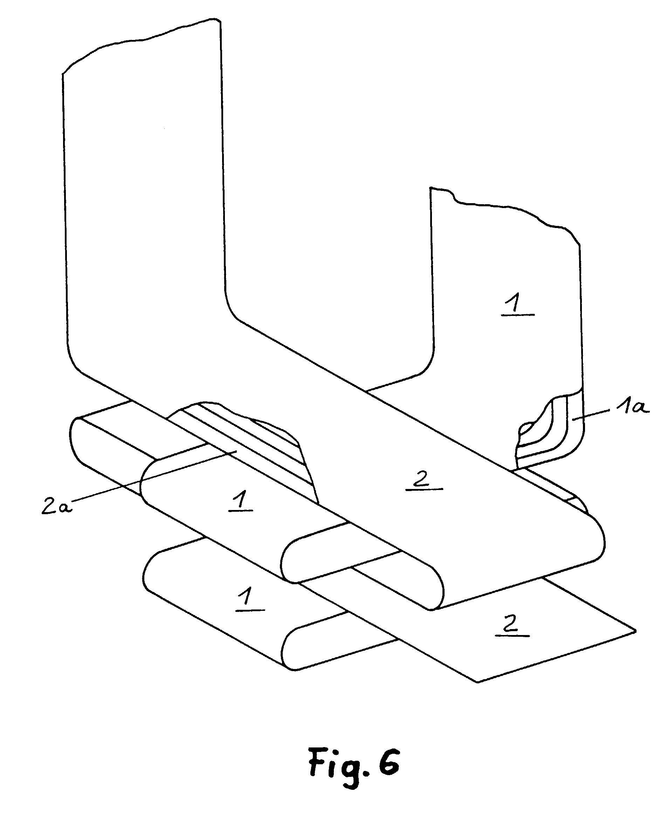

Figur 6 zeigt in perspektivischer Darstellungsweise ein Hohlfadengelege aus gewebten Hohlfadenbändern 1; 2, das durch das gleichzeitige mäanderförmige Ablegen von zwei gewebten Hohlfadenbändern 1; 2 gebildet wird, wobei sich die in Längsrichtung eines jeden gewebten Hohlfadenbandes erstreckenden Hohlfäden 1a bzw. 2a im fertigen Hohlfadengelege rechtwinklig kreuzen. Diese Art des Ablegens wird bei textilen Stoffbahnen auch als Abtafeln bezeichnet. Es kann von Hand oder maschinell erfolgen. Die Weiterverarbeitung des Hohlfadengeleges zu einem Hohlfadenmodul kann beispielsweise in der Weise erfolgen, daß die Umlenkstellen (Knickstellen) der gewebten Hohlfadenbänder 1; 2 an den vier Längsseiten des Hohlfadengeleges in eine entsprechend bemessene Vergußmasseplatte eingebettet (eingeschleudert) werden und die Hohlfadenhohlräume (Lumen) anschließend freigelegt werden. Ein solcher Hohlfadenmodul gestattet es, drei Fluide an einem Stoff- und/oder Wärmeaustausch teilnehmen zu lassen, wobei das erste Fluid durch die Hohlfäden 1a, das zweite Fluid durch die Hohlfäden 2a und das dritte Fluid außen um die Hohlfäden 1a und 2a geführt wird. Es ist jedoch auch möglich, aus dem mehrschichtigen Gelege beispielsweise runde Segmente auszustanzen und diese einzeln oder in der ausgestanzten mehrschichtigen Anordnung weiter zu verarbeiten, d.h. die Hohlfadenenden in eine aushärtbare Vergußmasse einzuschleudern usw.

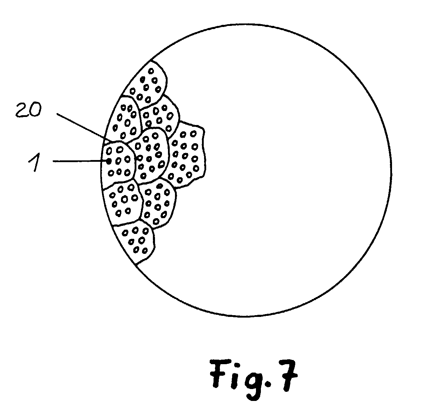

Figur 7 zeigt ausschnittsweise den Querschnitt eines Hohlfadenbündels aus gewebten Hohlfadenbändern, bei welchem die Hohlfäden 1 im wesentlichen parallel zur Bündellängsachse angeordnet sind, wobei die gewebten Hohlfadenbänder zu Teilbündeln mit beliebigem im wesentlichen unregelmäßigem Querschnitt derart verformt sind, daß die Hohlfäden 1 im wesentlichen ohne Lückenbildung gleichmäßig über den Hohlfadenbündelquerschnitt verteilt angeordnet sind. Das Hohlfadenbündel besteht also aus einer Vielzahl von gewebten im wesentlichen parallel zueinander angeordneten verformten gewebten Hohlfadenbändern. Die eingezeichneten Begrenzungslinien 20 jedes verformten gewebten Hohlfadenbandes dienen nur der Verdeutlichung, d.h. es handelt sich nur um gedachte, in Wirklichkeit nicht vorhandene Grenzen zwischen den einzelnen Teilbündeln. Trotz dieser Anordnung wird durch das Vorhandensein der Schußfäden (nicht dargestellt) erreicht, daß die Hohlfäden 1 nicht in die Zwischenräume benachbarter Hohlfäden 1 rutschen, sondern ein gut durchströmbares verhältnismäßig lockeres Hohlfadenbündel gebildet wird. Auch bei dieser Anordnung der gewebten Hohlfadenbänder ist es möglich, einen Kern (Kernrohr) vorzusehen und die gewebten Hohlfadenbänder im wesentlichen ohne Lückenbildung gleichmäßig über den verbleibenden ringförmigen Querschnitt verteilt anzuordnen.

## Patentansprüche

1. Gewebtes Hohlfadenband mit Schußfäden und Hohlfäden als Kettfäden, dadurch gekennzeichnet, daß das Hohlfadenband als doppelschüssiges Band ausgebildet ist und daß auch die beiden äußeren Kettfäden des Hohlfadenbandes Hohlfäden sind.

2. Gewebtes Hohlfadenband nach Anspruch 1, dadurch gekennzeichnet, daß die Bandkante als Wirkkante ausgebildet ist.

3. Gewebtes Hohlfadenband nach Anspruch 1 oder 2, dadurch gekennzeichnet, daß die Schußdichte wesentlich geringer als bei normalen gewebten Textilbändern ist.

4. Verfahren zum Herstellen des gewebten Hohlfadenbandes nach einem der Ansprüche 1 bis 3, dadurch gekennzeichnet, daß der Schußeintrag ähnlich wie bei einer schützenlosen Bandwebmaschine üblich durchgeführt wird.

5. Verfahren nach Anspruch 4, dadurch gekennzeichnet, daß der Schußeintrag ähnlich wie bei einer Nadelbandwebmaschine üblich durchgeführt wird.

6. Verfahren nach Anspruch 4 oder 5, dadurch gekennzeichnet, daß die Zu- bzw. Abführgeschwindigkeit der Hohlfäden 10 bis 80 m/min beträgt und die Schußfrequenz im Bereich von 50 bis 200 Hz liegt.

7. Verfahren nach wenigstens einem der Ansprüche 4 bis 6, dadurch gekennzeichnet, daß es in den Herstellungsprozeß für die Hohlfäden integriert ist.

8. Hohlfadenbündel, bei welchem die Hohlfäden als Kettfäden gewebter Hohlfadenbänder vorliegen, die Hohlfäden mit der Bündellängsachse einen Winkel bilden, die Hohlfäden innerhalb eines gewebten Hohlfadenbandes im wesentlichen parallel zueinander angeordnet sind und der eine Teil der gewebten Hohlfadenbänder mit dem anderen Teil der gewebten Hohlfadenbänder einen Kreuzungswinkel bildet, dadurch gekennzeichnet, daß die gewebten Hohlfadenbänder nach wenigstens einem der Ansprüche 1 bis 3 ausgebildet sind, daß die Hohlfäden mit der Bündellängsachse einen Winkel ≤ 15° bilden und daß der Kreuzungswinkel der gewebten Hohlfadenbänder ≤ 30° ist.

9. Hohlfadenbündel, bei welchem die Hohlfäden als Kettfäden gewebter Hohlfadenbänder vorliegen, dadurch gekennzeichnet, daß die gewebten Hohlfadenbänder nach wenigstens einem der Ansprüche 1 bis 3 ausgebildet sind, daß die Hohlfäden im wesentlichen parallel zur Bündellängsachse angeordnet sind und daß die gewebten Hohlfadenbänder zu Teilbündeln mit beliebigem im wesentlichen unreglmäßigem Querschnitt derart verformt sind, daß die Hohlfäden im wesentlichen ohne Lückenbildung gleichmäßig über den Hohlfadenbündelquerschnitt verteilt angeordnet sind.

## Claims

1. Woven band of hollow filaments with weft threads and hollow filaments as the warp, characterised in that the band of hollow filaments is constructed as a double-weft band and that the two outer warp filaments in the band of hollow filaments are also hollow filaments.

2. A woven band of hollow filaments according to Claim 1, characterised in that the edge of the band is designed as knitted edge.

3. A woven band of hollow filaments according to Claim 1 or 2, characterised in that the weft density is substantially less than in normal woven textile bands.

4. A process for producing the woven band of hollow filaments according to Claims 1 to 3, characterised in that weft insertion is performed similarly as usual in a shuttleless band weaving machine.

5. A process according to Claim 4, characterised in that weft insertion is performed similarly as usual in a needle band weaving machine.

6. A process according to Claim 4 or 5, characterised in that the speed of feeding and withdrawing the hollow filaments is 10 to 80 m/min and the weft frequency is in the range of 50 to 200 Hz.

7. A process according to at least one of Claims 4 to 6, characterised in that it is integrated in the production process for the hollow filaments.

8. A bundle of hollow filaments in which the hollow filaments are present as the warp in woven bands of hollow filaments, the hollow filaments forming an angle with the longitudinal axis of the bundle, the hollow filaments within one woven band of hollow filaments being substantially parallel to each other and in which some of the woven bands of hollow filaments form a cross-over angle with the other woven bands of hollow filaments, characterised in that the woven bands of hollow filaments are constructed according to at least one of Claims 1 to 3, that the hollow filaments form an angle of ≤ 15° with the longitudinal axis of the bundle and that the cross-over angle of the woven bands of hollow filaments is ≤ 30°.

9. A bundle of hollow filaments in which the hollow filaments are present as the warp in the woven band of hollow filaments, characterised in that the woven bands of hollow filaments are constructed according to at least one of Claims 1 to 3, that the hollow filaments are arranged substantially parallel to the longitudinal axis of the bundle and that the woven bands of hollow filaments are formed into partial bundles with substantially irregular cross-sections of any type in such a way that the hollow filaments are distributed uniformly over the cross-section of the bundle of hollow filaments substantially without the production of gaps.

## Revendications

1. Ruban tissé à filaments creux comportant des fils de trame et des filaments creux comme fils de chaîne, caractérisé par le fait que le ruban à filaments creux est réalisé sous forme de ruban à duite double et par le fait que les deux fils de chaîne extérieurs du ruban à filaments creux sont également des filaments creux.

2. Ruban tissé à filaments creux selon la revendication 1, caractérisé par le fait que la lisière du ruban est réalisée sous forme de lisière tricotée.

3. Ruban tissé à filaments creux selon la revendication 1 ou 2, caractérisé par le fait que le nombre de duites est sensiblement plus faible que dans des rubans textiles tissés normaux.

4. Procédé de fabrication du ruban tissé à filaments creux selon l'une des revendications 1 à 3, caractérisé par le fait que la trame est insérée de la même manière, que celle habituellement appliquée sur un métier à ruban sans navette.

5. Procédé de fabrication du ruban tissé à filaments creux selon la revendication 4, caractérisé par le fait que la trame est insérée de la même manière, que celle habituellement appliquée sur un métier à ruban à aiguilles.

6. Procédé de fabrication du ruban tissé à filaments creux selon la revendication 4 ou 5, caractérisé par le fait que la vitesse d'entrée et de sortie des filaments creux est comprise entre 10 et 80 m/min et que la fréquence de duites est comprise entre 50 et 200 Hz.

7. Procédé de fabrication du ruban tissé à filaments creux selon au moins une des revendications 4 à 6, caractérisé par le fait qu'il est intégré dans le processus de fabrication des filaments creux.

8. Faisceau de filaments creux dans lequel les filaments creux sont présents sous forme de fils de chaîne de rubans tissés à filaments creux, les filaments creux forment un angle avec l'axe longitudinal du faisceau, les filaments creux sont disposés sensiblement parallèlement les uns aux autres à l'intérieur d'un ruban tissé de filaments creux et une partie des rubans tissés à filaments creux forme un angle avec l'autre partie des rubans tissés à filaments creux, caractérisé par le fait que les rubans tissés à filaments creux sont réalisés selon au moins une des revendications 1 à 3, par le fait que les filaments creux forment un angle ≤ 15° avec l'axe longitudinal du faisceau et par le fait que l'angle de croisement des rubans tissés à filaments creux est ≤ 30°.

9. Faisceau de filaments creux dans lequel les filaments creux sont présents sous forme de fils de chaîne de rubans tissés à filaments creux, caractérisé par le fait que les rubans tissés à filaments creux sont réalisés selon au moins une des revendications 1 à 3, par le fait que les filaments creux sont disposés sensiblement parallèlement à l'axe longitudinal du faisceau et par le fait que les rubans tissés à filaments creux sont conformés en faisceaux partiels de section quelconque, essentiellement irrégulière, de telle sorte que les filaments creux soient répartis sensiblement régulièrement, sans vide, sur la section du faisceau de filaments creux.
